Europäisches Patentamt

European Patent Office

Office européen des brevets

(11) Numéro de publication: **0 282 626**
**A2**

## (12) DEMANDE DE BREVET EUROPEEN

(21) Numéro de dépôt: 87108659.1

(22) Date de dépôt: 16.06.87

(51) Int. Cl.4: **F16K 1/30** , F16K 15/20

(30) Priorité: **18.03.87 CH 1015/87**

(43) Date de publication de la demande:
**21.09.88 Bulletin  88/38**

(84) Etats contractants désignés:
**AT BE CH DE ES FR GB GR IT LI LU NL SE**

(71) Demandeur: **Cafiso, Emmanuel**
**109b route de Chevenez**
**CH-2905 COURTEDOUX(CH)**

(72) Inventeur: **Cafiso, Emmanuel**
**109b route de Chevenez**
**CH-2905 COURTEDOUX(CH)**

(74) Mandataire: **Meylan, Robert Maurice et al**
**c/o BUGNION S.A. 10, route de Florissant**
**Case Postale 375**
**CH-1211 Genève 12 - Champel(CH)**

(54) **Valve pour chambre pneumatique d'amortisseur hydropneumatique.**

(57) La valve est logée dans un corps fileté (9) destiné à remplacer le bouchon d'origine. En plus d'un clapet (18) elle comprend un bouchon (12) dont l'extrémité conique (15) coopère avec un siège conique (14), opposé au siège du clapet (18) assurant une seconde étanchéité de la valve.

Fig. 2

## Valve pour chambre pneumatique d'amortisseur hydropneumatique.

La présente invention a pour objet une valve pour chambre pneumatique d'amortisseur hydropneumatique destinée à remplacer le bouchon d'origine, comprenant un corps fileté muni d'une tête circulaire filetée dont la face inférieure présente une gorge dans laquelle est logée une garniture d'étanchéité et présentant un passage axial contenant un clapet.

La suspension de certaines voitures automobiles comprend des amortisseurs hydropneumatiques constitués d'une enceinte métallique occupée en partie par une enceinte élastique étanche contenant un gaz sous pression, l'enceinte métallique étant reliée à un système à vérin hydraulique à simple effet à travers un étrangleur. L'enceinte intérieure élastique est constituée partiellement par une membrane élastique présentant à sa partie supérieure une ouverture fermée par un bouchon qui sert en même temps à la fixation de l'enceinte intérieure au moyen d'une coupelle métallique. Malgré tout le soin apporté au montage de ces amortisseurs, des microfuites, en particulier au niveau de la zone d'étanchéité entre la membrane et la coupelle métallique et à travers la membrane, sont toujours possibles. Le fait que l'enceinte pneumatique est remplie par du gaz à très haute pression favorise encore ces microfuites. Avec le temps, la pression dans la chambre pneumatique diminue, principalement lorsque l'amortisseur doit absorber de grands chocs. En outre, une sphère gonflée à l'avance n'a souvent plus, après une certaine période de stockage, le tarage d'origine lors du montage. De ce fait, au moment du montage il arrive souvent que les sphères, qui sont montées par paires pour des raisons de confort et de sécurité, n'ont plus le même gonflage. Ainsi, par exemple, une paire de sphères dont l'une est à une pression de 50 bars et l'autre à 40 bars provoque un déséquilibre de la voiture. Une perte de pression peut avoir des conséquences plus graves. En effet, lorsque le volume de la chambre pneumatique devient trop petit, la partie inférieure de sa membrane peut, en cas de choc, arriver en contact avec la coupelle métallique et risque alors de se percer. Si la membrane est percée, l'huile de la chambre hydralique et le gaz de la chambre pneumatique se mélangent et l'amortisseur perd toute son efficacité. Dans tous les cas, jusqu'ici, toute sphère d'amortisseur ayant subi une perte notable de pression devait être remplacée.

Pour pallier à ces inconvénients, on a déjà proposé de remplacer le bouchon d'origine de la sphère par une valve à bille, mais la valve utilisée assure une étanchéité et une sécurité insuffisantes. Elle peut notamment être démontée ou actionnée par une personne non compétente.

La présente invention a pour but de remplacer le bouchon d'origine d'une chambre pneumatique d'amortisseur hydropneumatique par une valve occupant approximativement le même espace que le bouchon d'origine, assurant une étanchéité approximativement égale à celle du bouchon d'origine et offrant une grande sécurité.

La valve selon l'invention est caractérisée par le fait que la tête de la valve présente une hauteur inférieure à la longueur du corps fileté et que le passage axial est taraudé dans cette tête, cette partie taraudée étant suivie d'un siège conique suivi d'un étrang lement lui-même suivi d'un siège de clapet pour un clapet de valve constitué d'un plot muni d'une tige s'engageant dans l'étranglement et entourée d'une garniture de joint torique, le clapet étant retenue d'autre part par une vis vissée à l'autre extrémité dudit corps et percée d'un trou axial, la valve étant fermée, en période de non utilisation, par un bouchon vissé dans ledit passage axial taraudé et présentant une extrémité conique venant s'appliquer sur ledit siège conique.

La tête de la valve n'est guère supérieure à la hauteur de la tête du bouchon d'origine, de telle sorte qu'il ne se forme pas de saillie inacceptable et dangereuse au-dessus de la sphère. En période de non-utilisation, la valve est fermée par un bouchon noyé dans la tête, empêchant l'utilisation intempestive de la valve et assurant une seconde fermeture étanche, en plus de la fermeture étanche assurée par le clapet.

La tête de la valve est en outre de préférence munie de moyens permettant la fixation d'une vanne spéciale reliée par un tube à une source de gaz comprimé.

Le dessin annexé représente, à titre d'exemple, une forme d'exécution de l'invention.

La figure 1 est une vue en coupe d'un amortisseur hydropneumatique connu muni d'une valve selon l'invention.

La figure 2 est une vue en coupe axiale de la valve.

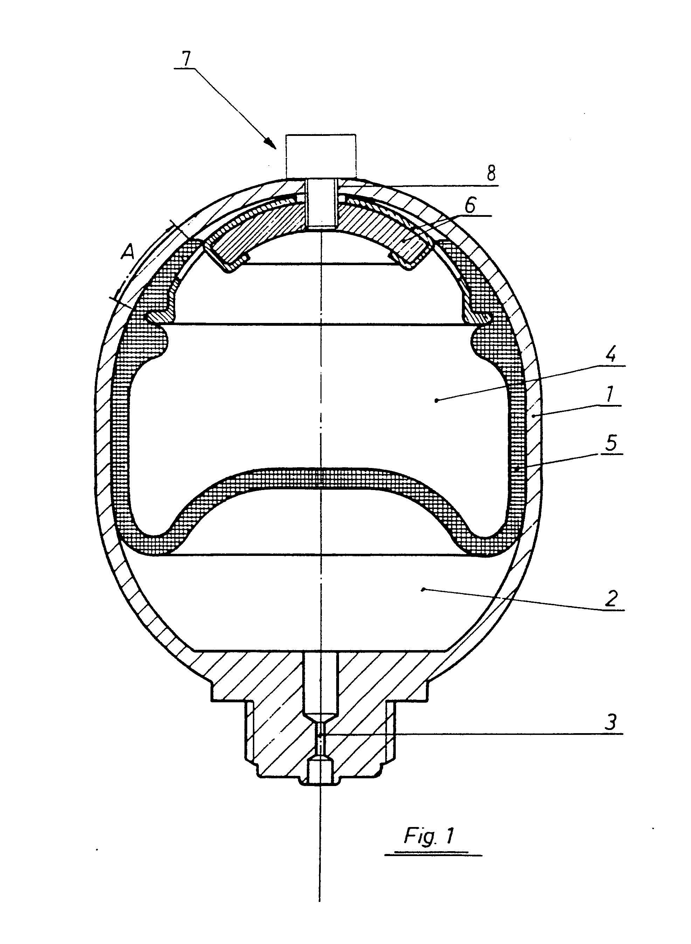

L'amortisseur hydropneumatique connu représenté à la figure 1 est constitué d'une enceinte métallique 1 contenant d'une part une chambre hydraulique 2 communiquant par un étrangleur 3 avec un système de vérin hydraulique à simple effet non représenté, et une chambre pneumatique 4 limitée par une membrane élastique 5 fermée et maintenue contre la paroi de l'enceinte 1 par une coupelle métallique 6. Cette coupelle 6 est maintenue par la partie filetée d'une valve 7 traversant l'enceinte métallique 1 par un orifice 8.

Le corps de la valve 7 comprend une tête circulaire filetée 9 et une partie filetée 10 vissée dans la coupelle 6. La hauteur de la tête 9 est inférieure à la longueur de la partie filetée 10. Le corps de valve est traversé par un passage axial dont la partie 11 située dans la tête est taraudée pour recevoir un bouchon métallique 12 muni d'un six-pans intérieur. La partie taraudée 11 se termine par un siège conique 14 dont la surface est polie. Sur ce siège 14 vient s'appliquer l'extrémité conique 15 du bouchon 12 pour assurer une fermeture étanche supplémentaire. En-dessous du siège 14, le passage axial est constitué par un étranglement 16 suivi d'un siège de valve plan 17 contre lequel vient s'appliquer la garniture de joint 19 d'un clapet 18 constitué d'un plot hexagonal muni d'une tige 20 pénétrant avec jeu dans l'étranglement 16 et portant la garniture torique 19. La section hexagonale assure le passge du gaz. Le clapet 18 est retenu dans son alésage 21 par une vis 22 vissée dans le corps de valve et munie d'un trou axial 23.

Le pourtour de la tête 9 est fileté de manière à permettre la fixation par vissage d'un capuchon en matière synthétique, en forme de calotte cylindrique. L'étanchéité entre la tête de valve 9 et l'enceinte métallique 1 est en outre assurée par une garniture d'étan chéité 24 logée dans une rainure prévue dans la base de la tête 9.

La valve est donc doublement protégée par le bouchon 12 qui assure une étanchéité complémentaire, et par le capuchon. Il est nécessaire d'enlever ces deux éléments pour pouvoir introduire un gaz comprimé dans l'enceinte.

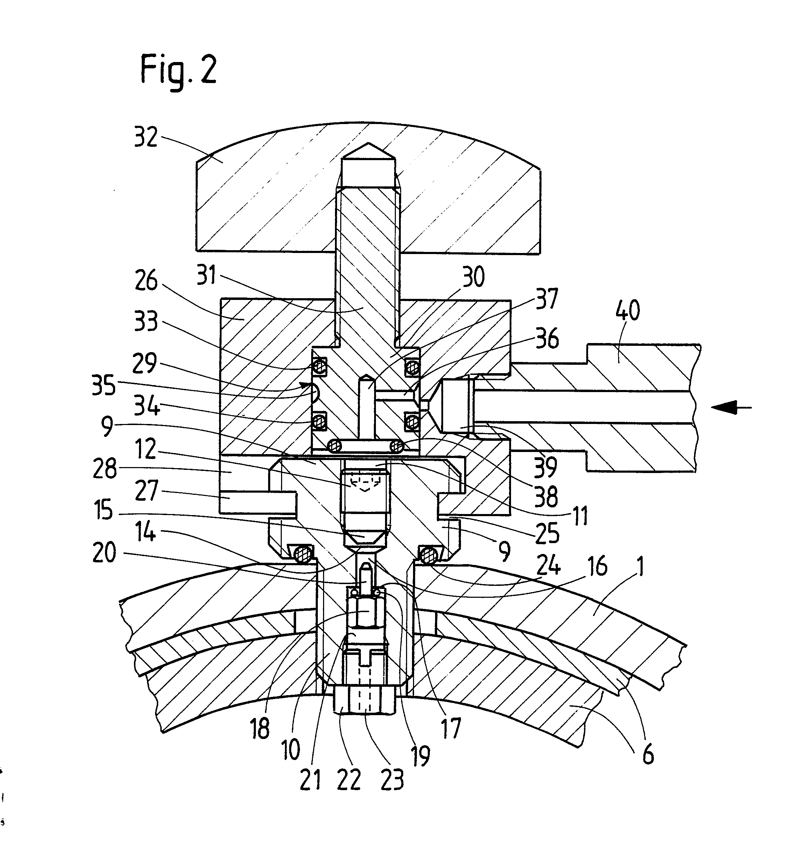

La tête 9 est en outre munie d'une gorge périphérique 25 destinée à la fixation d'une vanne de raccordement de la valve 7 à une source de gaz comprimé. Cette vanne de raccordement comprend un corps 26 de forme prismatique hexagonale dont la base est pourvue d'une rainure 27 profilée en T dans laquelle peut venir s'engager la tête de valve 9 par son profil en I, comme représenté à la figure 2. Le corps de vanne 26 présente un alésage central 29 dans lequel est logé un piston 30 solidaire d'une partie filetée 31 vissée dans un passage taraudé du corps 26 et solidaire d'une poignée ou manette 32 permettant de déplacer le piston en vissant ou dévissant sa partie filetée 31. Ce piston 30 est muni de deux garnitures toriques 33 et 34 assurant l'étanchéité du piston entre ses garnitures, cette partie médiane du piston présentant une gorge périphérique 35 communiquant avec un conduit radial 36 débouchant dans un conduit axial 37 débouchant à son tour sur la face inférieure du piston 30 dans une creusure limitée par une gorge annulaire dans laquelle est logée une garniture de joint 38 constituée par un O-ring, dont le diamètre intérieur est légèrement supérieur au diamètre du passage 11 de la valve. Le corps de valve 26 est muni d'un trou radial 39 auquel est reliée l'extrémité d'un tube 40 relié à une source de gaz comprimé.

Pour remplir la sphère 1, on fixe la vanne à la valve 7 comme représenté à la figure 2 puis l'on fait descendre le piston 30 en tournant la poignée 32. Le joint O-ring 38 vient alors s'appliquer contre la face supérieure de la tête 9, autour du passage 11. Une fois que le joint O-ring 38 commence à être comprimé, la gorge 35 du piston 30 vient en communication avec le trou 39, mettant en communication la source de gaz comprimé avec la valve 7. On remarque que le piston 30 assure simultanément la fixation de la vanne à la tête de valve 9.

## Revendications

1. Valve pour chambre pneumatique d'amortisseur hydropneumatique destinée à remplacer le bouchon d'origine, comprenant un corps fileté muni d'une tête circulaire filetée (9) dont la face inférieure présente une gorge dans laquelle est logée une garniture d'étanchéité (25) et présentant un passage axial contenant un clapet (18), caractérisée par le fait que la tête (9) de la valve présente une hauteur inférieure à la longueur du corps fileté (10) et que le passage axial est taraudé dans cette tête, cette partie taraudée (11) étant suivie d'un siège conique (14) suivi d'un étranglement (16) lui-même suivi d'un siège de clapet (17) pour un clapet de valve (18) constitué d'un plot muni d'une tige (20) s'engageant dans l'étranglement (16) et entourée d'une garniture de joint torique (19), le clapet étant retenu d'autre part par une vis (22) vissée à l'autre extrémité dudit corps et percée d'un trou axial (23), la valve étant fermée, en période de nonutilisation, par un bouchon (12) vissé dans ledit passage axial taraudé et présentant une extrémité conique (15) venant s'appliquer sur ledit siège conique (14).

2. Valve selon la revendication 1, caractérisée par le fait que la tête (9) présente une gorge périphérique (25) destinée à donner prise à une vanne de raccordement à une source de gaz sous pression.

3. Valve selon la revendication 1 ou 2, caractérisée par le fait que le clapet (18) présente une section polygonale.

4. Vanne de raccordement de la valve selon la revendication 2 à une source de gaz sous pression, caractérisée par le fait qu'elle comprend un corps de vanne (26) muni d'une rainure (27) profilée en T destinée à venir s'engager sur et autour de la tête de la valve (9), dans sa gorge (25), ledit corps (26) comportant en outre un alésage cylindrique (29) dans lequel est monté un piston (30) solidaire d'une manette (32) et présentant un conduit (36, 37) débouchant d'une part latéralement sur le piston dans une gorge périphérique (35) et d'autre part sur la partie frontale du piston, cette partie frontale étant munie d'une garniture élastique de joint torique (38) destinée à venir s'appliquer sous pression sur la tête de valve (9) lorsque la gorge du piston est en communication un conduit latéral d'entrée (39) prévu dans ledit corps de vanne.

*Fig. 1*

# Fig. 2